# FASCICULE DE BREVET EUROPEEN

(11) **EP 3 317 562 B1**
(45) Date de publication et mention de la délivrance du brevet: **29.07.2020**
(21) Numéro de dépôt: 16741058.8
(22) Date de dépôt: 03.06.2016
(51) Int. Cl.: F16H 59/02, B60K 20/04

(54) **SOUFFLET D'UNE COMMANDE DE BOÎTE DE VITESSES ET PROCEDE DE MONTAGE DU SOUFFLET SUR UN VEHICULE AUTOMOBILE**
BALG FÜR EINE GETRIEBESTEUERUNG UND VERFAHREN ZUR MONTAGE DES BALGS AN EINEM KRAFTFAHRZEUG
BOOT FOR A GEARBOX CONTROL AND METHOD FOR FITTING THE BOOT ON A MOTOR VEHICLE

(30) Priorité: 02.07.2015 FR 1556234
(43) Date de publication de la demande: 09.05.2018
(73) Titulaire: PSA AUTOMOBILES S.A., 78300 Poissy (FR)
(72) Inventeur: BARD, Sebastien, 70000 Vellefaux (FR)
(74) Mandataire: Fernandez, Francis Lionel
(86) Numéro de dépôt international: PCT/FR2016/051327
(87) Numéro de publication internationale: WO 2017/001736

(56) Documents cités:
- EP-A1- 0 315 128
- EP-A2- 0 775 854
- DE-A1- 3 406 486
- DE-A1- 4 101 326
- FR-A1- 2 873 631

## Description

La présente invention se rapporte à un soufflet d'une commande de boîte de vitesses, ainsi qu'au procédé de montage d'un tel soufflet sur un véhicule automobile.

L'invention appartient au domaine des soufflets de commande de boîtes de vitesses des véhicules automobiles.

Certains véhicules automobiles comportent une boîte de vitesses manuelle interposée entre un moteur et des roues. Une commande de boîte de vitesses permet au conducteur du véhicule de choisir le rapport de démultiplication de la boîte de vitesses, par l'intermédiaire d'un pommeau fixé à la commande de boîte de vitesses.

Un soufflet est généralement disposé autour de la commande de boîte de vitesses pour masquer les pièces mécaniques de cette commande. Le soufflet a ainsi habituellement une fonction principale d'ordre esthétique.

Les commandes de boîtes génèrent des bruits mécaniques qui peuvent être gênants pour les occupants du véhicule.

On connaît du document FR-B1-2 873 631 un soufflet de commande de boîte de vitesses dont la surface interne est tapissée d'un matériau insonorisant, de façon à constituer un ensemble présentant des propriétés de protection acoustique, ce qui permet d'atténuer la remontée de bruits mécaniques dans l'habitacle du véhicule.

Le fait de recouvrir de matériau insonorisant l'une des surfaces du soufflet a pour inconvénient de diminuer sa souplesse, ce qui réduit la maniabilité de la commande de boîte de vitesses.

L'invention a pour but de remédier aux inconvénients de l'art antérieur.

Dans ce but, la présente invention propose un soufflet d'une commande de boîte de vitesses, le soufflet ayant une forme générale tubulaire comportant une section de plus petit diamètre, une surface du soufflet étant au moins partiellement tapissée d'un matériau insonorisant, le soufflet étant remarquable en ce que :
- il comporte une coiffe formant un premier cône tronqué et une excroissance formant un second cône tronqué, la coiffe et l'excroissance étant liées à l'endroit de ladite section de plus petit diamètre ; et
- la surface au moins partiellement tapissée du matériau insonorisant appartient à l'excroissance.

Ainsi, la coiffe conserve une souplesse qui permet de réduire l'effort nécessaire à la manipulation de la commande de boîte de vitesses.

Selon une caractéristique particulière, le matériau insonorisant est cousu sur l'excroissance.

Selon une caractéristique particulière, le matériau est une fibre synthétique.

Selon une caractéristique particulière, le soufflet est conçu pour que la coiffe et l'excroissance puissent être rabattues l'une sur l'autre de façon que le matériau insonorisant se trouve intercalé entre la coiffe et l'excroissance.

Ainsi, le matériau insonorisant étant intercalé entre la coiffe et l'excroissance, cela permet de prévenir le risque de dépôt de particules du matériau insonorisant sur les pièces mécaniques en mouvement de la commande de boîte et d'éviter le blocage de la commande.

L'invention concerne également une commande de boîte de vitesses comprenant un tel soufflet et un pommeau de commande maintenu dans le soufflet au niveau de la section de plus petit diamètre mentionnée plus haut.

L'invention porte encore sur un véhicule automobile comportant une telle commande de boîte.

L'invention vise enfin un procédé de montage d'une telle commande de boîte dans un véhicule, ce procédé comportant des étapes successives consistant à :
- fixer le pommeau sur un élément de fixation de la commande de boîte ;
- positionner l'excroissance de façon que le matériau insonorisant se trouve sur une surface opposée au pommeau ; et
- rabattre la coiffe sur l'excroissance de façon que le matériau insonorisant se trouve intercalé entre la coiffe et l'excroissance.

Selon une caractéristique particulière, le procédé de montage comporte en outre une étape précédant l'étape de fixation du pommeau, consistant à rabattre l'excroissance sur la coiffe de façon que le matériau se trouve intercalé entre la coiffe et l'excroissance.

Ainsi, le matériau insonorisant est protégé des contacts avec d'autres pièces mécaniques de la commande de boîte, ce qui permet, non seulement d'éviter d'endommager ce matériau, mais aussi de ne pas déposer des particules de ce matériau au niveau de ces autres pièces mécaniques.

L'invention sera mieux comprise et d'autres aspects et avantages apparaîtront plus clairement à la lecture de la description qui suit d'un mode particulier de réalisation, donné à titre d'exemple nullement limitatif et en référence aux dessins qui l'accompagnent, dans lesquels :
- la figure 1 est une vue schématique d'un soufflet conforme à l'invention ;
- la figure 2 est un vue du soufflet de la figure 1 selon une coupe AA' ;
- la figure 3 est une vue schématique partielle d'une commande de boîte de vitesses comprenant le soufflet des figures 1 et 2 ;
- la figure 4 est une vue de la commande de la figure 3 selon la coupe AA' ;
- la figure 5 présente la commande des figures 3 et 4 selon la coupe AA', à la suite d'une étape optionnelle d'un procédé de montage de cette commande ; et
- la figure 6 présente la commande des figures 3 et 4 selon la coupe AA', à la suite d'une autre étape du procédé de montage de cette commande.

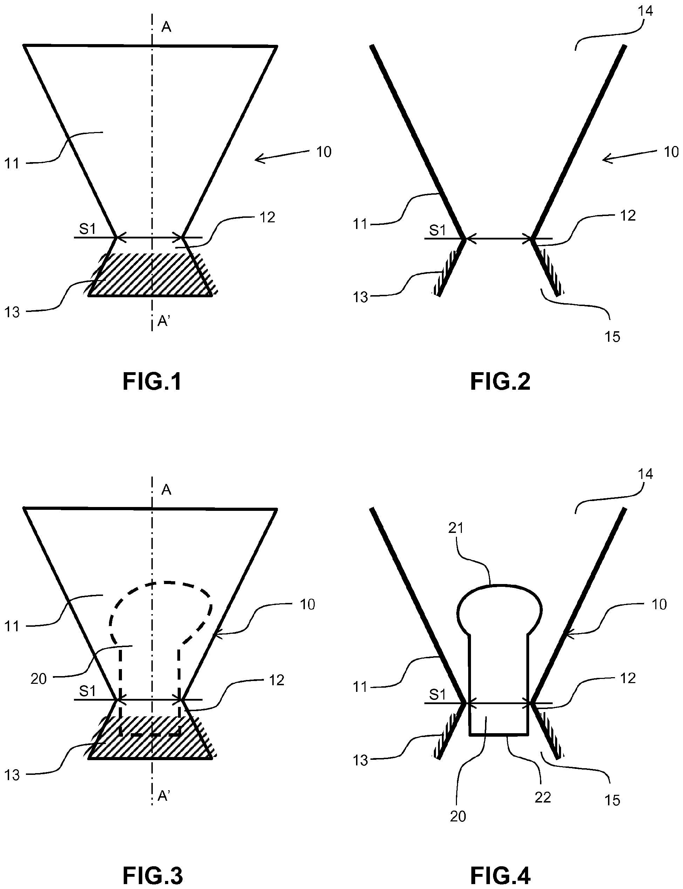

La figure 1 présente un soufflet 10 de commande de boîte de vitesses de forme générale tubulaire présentant une section S1 de plus petit diamètre. Le soufflet 10 comporte une coiffe 11, une excroissance 13 et un matériau insonorisant 13.

La coiffe 11 forme un premier cône tronqué et l'excroissance 12 forme un second cône tronqué. La coiffe 11 et l'excroissance 12 sont liées à l'endroit de la section S1 de plus petit diamètre.

La coiffe 11 est souple et est par exemple réalisée en Tissu Enduit Plastique (TEP). La coiffe 11 a une fonction essentiellement esthétique et permet de masquer des éléments mécaniques de la commande de boîte, tout en permettant la mobilité des pièces en mouvement de la commande.

Conformément à l'invention, une surface de l'excroissance 12 est au moins partiellement tapissée du matériau insonorisant 13.

La coiffe 11 est dépourvue d'une couche supplémentaire de matériau insonorisant, elle conserve donc un aspect souple et la manipulation de la commande de boîte ne nécessite pas d'effort supplémentaire.

Le matériau insonorisant 13 peut être cousu ou collé sur l'excroissance 12.

Le matériau insonorisant 13 est par exemple une fibre synthétique, telle que du Thinsulate (marque déposée). De préférence, le matériau insonorisant 13 est souple et peut être cousu.

L'excroissance 12 peut être d'un seul tenant avec la coiffe 11 ou être constituée d'une ou plusieurs pièces assemblées avec la coiffe 11. L'excroissance 12 n'a aucune fonction esthétique et n'est pas visible une fois que le soufflet a été assemblé à la commande de boîte de vitesses.

A titre d'exemple non limitatif, l'ensemble formé par la coiffe 11 et l'excroissance 12 peut être réalisé par assemblage de deux pièces en TEP cousues bords à bords.

La figure 2 présente le soufflet 10 selon la coupe AA' de la figure 1 et permet de mieux visualiser la disposition du matériau insonorisant 13 qui tapisse une surface de l'excroissance 12.

La coiffe 11 et l'excroissance 12 comportent respectivement des ouvertures 14 et 15, de part et d'autre de la section S1 de plus petit diamètre du soufflet 10.

La figure 3 présente une vue partielle d'une commande de boîte de vitesses comportant le soufflet 10 et un pommeau 20.

Le pommeau 20 constitue une interface de la commande de boîte avec le conducteur, pour la modification des rapports de démultiplication de la boîte de vitesses.

Le pommeau 20 est maintenu dans le soufflet 10 au niveau de la section S1 de plus petit diamètre du soufflet. Une lanière (non illustrée) est par exemple disposée sur le pourtour du soufflet, au niveau de la section S1, pour maintenir le soufflet 10 sur le pommeau 20.

La figure 4 présente le soufflet 10 et le pommeau 20 selon la coupe AA' de la figure 3.

Le pommeau 20 comporte un élément de préhension 21 et un premier élément de fixation 22. L'élément de préhension 21 est destiné à être manipulé par la main du conducteur lors des changements de rapports de démultiplication de la boîte de vitesses.

Les ouvertures 14 et 15 permettent l'insertion du pommeau 20 dans le soufflet 10 avant la fixation du soufflet sur le pommeau.

Dans une étape d'un procédé de montage de la commande de boîte sur un véhicule, on fixe le pommeau 20 sur un deuxième élément de fixation de la commande de boîte (non illustré), par l'intermédiaire du premier élément de fixation 22 du pommeau 20.

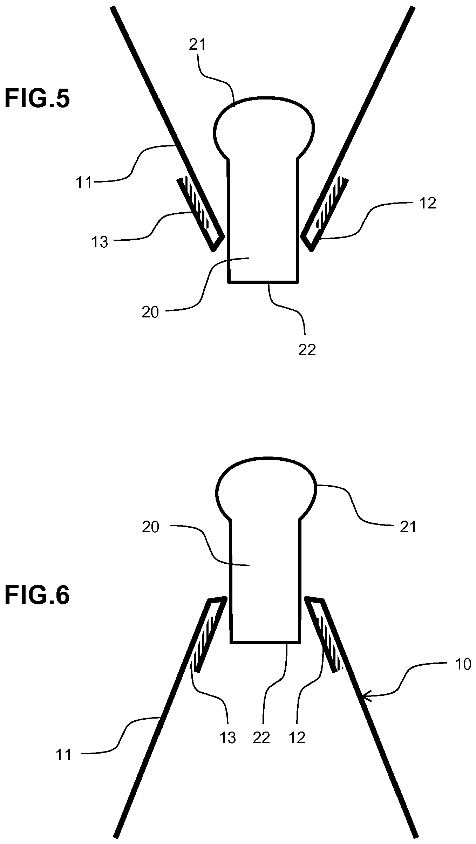

La figure 5 présente le soufflet 10 et le pommeau 20 à la suite d'une étape optionnelle de ce procédé de montage.

Lors de cette étape optionnelle, l'excroissance 12 est repliée sur la coiffe 11, de façon à libérer l'accès à l'élément de fixation 22 du pommeau 20.

Ainsi la fixation du pommeau 20 sur le deuxième élément de fixation se trouve facilitée.

Après avoir fixé le pommeau 20 sur le deuxième élément de fixation, on déplie l'excroissance, de façon que le matériau insonorisant 13 se trouve sur la surface opposée au pommeau. On se trouve alors dans la configuration déjà présentée en figure 4.

La figure 6 présente le soufflet 10 et le pommeau 20 à la suite d'une étape supplémentaire du procédé de montage.

Dans cette étape supplémentaire, on rabat la coiffe 11 sur l'excroissance 12 de façon que le matériau insonorisant 13 se trouve intercalé entre la coiffe et l'excroissance.

Ainsi, le matériau insonorisant 13 est protégé des contacts avec les autres pièces mécaniques de la commande de boîte, ce qui permet, non seulement d'éviter d'endommager ce matériau, mais aussi de ne pas déposer des particules du matériau 13 au niveau de ces pièces mécaniques.

Ainsi, un tel soufflet confère un effort réduit lors manipulation de la commande de boîte de vitesses et conserve un aspect souple, tout en évitant le dépôt de particules du matériau insonorisant sur des pièces mécaniques de la commande de boîte de vitesses.

## Revendications

1. Soufflet (10) d'une commande de boîte de vitesses, ledit soufflet (10) ayant une forme générale tubulaire comportant une section (S1) de plus petit diamètre, une surface dudit soufflet (10) étant au moins partiellement tapissée d'un matériau insonorisant (13),
ledit soufflet (10) étant **caractérisé en ce que** :
- il comporte une coiffe (11) formant un premier cône tronqué et une excroissance (12) formant un second cône tronqué, ladite coiffe (11) et ladite excroissance (12) étant liées à l'endroit de ladite section (S1) de plus petit diamètre ; et
- la surface au moins partiellement tapissée dudit matériau insonorisant (13) appartient à ladite excroissance (12).

2. Soufflet (10) selon la revendication 1, **caractérisé en ce que** ledit matériau (13) est cousu sur ladite excroissance (12).

3. Soufflet (10) selon la revendication 1 ou 2, **caractérisé en ce que** ledit matériau (13) est une fibre synthétique.

4. Commande de boîte de vitesses comprenant un soufflet (10) selon l'une quelconque des revendications précédentes et un pommeau (20) de commande, **caractérisé en ce que** ledit pommeau (20) est maintenu dans le soufflet (10) au niveau de ladite section (S1) de plus petit diamètre.

5. Véhicule automobile **caractérisé en ce qu'**il comporte une commande de boîte selon la revendication 4.

6. Procédé de montage d'une commande selon la revendication 4 dans un véhicule, **caractérisé en ce qu'**il comporte des étapes successives consistant à :
- fixer ledit pommeau (20) sur un élément de fixation de ladite commande de boîte ;
- positionner ladite excroissance (12) de façon que ledit matériau insonorisant (13) se trouve sur une surface opposée au pommeau (20) ; et
- rabattre ladite coiffe (11) sur ladite excroissance (12) de façon que ledit matériau (13) se trouve intercalé entre la coiffe et l'excroissance.

7. Procédé de montage selon la revendication 6, **caractérisé en ce qu'**il comporte en outre une étape précédant l'étape de fixation du pommeau (20), consistant à rabattre ladite excroissance (12) sur ladite coiffe (11) de façon que ledit matériau (13) se trouve intercalé entre la coiffe (11) et l'excroissance (12).

## Patentansprüche

1. Faltenbalg (10) einer Getriebesteuerung, wobei der Balg (10) eine allgemein rohrförmige Form aufweist, die einen Abschnitt (S1) mit kleinerem Durchmesser umfasst, wobei eine Oberfläche des Balgs (10) zumindest teilweise mit einem Material bedeckt ist Schallschutz (13),
wobei der Balg (10) **dadurch gekennzeichnet** ist:
- Es umfasst eine Kappe (11), die einen ersten Kegelstumpf bildet, und eine Ausstülpung (12), die einen zweiten Kegelstumpf bildet, wobei die Kappe (11) und die Ausstülpung (12) weiter mit der Stelle des Abschnitts (S1) verbunden sind kleiner Durchmesser; und
- Die zumindest teilweise mit dem Schallschutzmaterial (13) bedeckte Oberfläche gehört zu der Ausstülpung (12).

2. Faltenbalg (10) nach Anspruch 1, **dadurch gekennzeichnet, dass** das Material (13) auf die Ausstülpung (12) aufgenäht ist.

3. Faltenbalg (10) nach Anspruch 1 oder 2, **dadurch gekennzeichnet, dass** das Material (13) eine synthetische Faser ist.

4. Getriebesteuerung, umfassend einen Balg (10) gemäß einem der vorhergehenden Ansprüche und einen Steuerknopf (20), der **dadurch gekennzeichnet ist, dass** der Knopf (20) in dem Balg (10) in dem Abschnitt gehalten wird (S1) mit kleinerem Durchmesser.

5. Kraftfahrzeug, das **dadurch gekennzeichnet ist, dass** es eine Getriebesteuerung nach Anspruch 4 umfasst.

6. Verfahren zum Montieren einer Steuerung gemäß Anspruch 4 in einem Fahrzeug, **gekennzeichnet dadurch, dass** es aufeinanderfolgende Schritte umfasst, bestehend aus:
- Befestigen des Knopfes (20) an einem Befestigungselement der Getriebesteuerung;
- Positionieren der Ausstülpung (12) so, dass sich das schallabsorbierende Material (13) auf einer dem Knopf (20) gegenüberliegenden Oberfläche befindet; und
- Falten Sie die Kappe (11) auf den Vorsprung (12), so dass das Material (13) zwischen der Kappe und dem Vorsprung liegt.

7. Montageverfahren nach Anspruch 6, **dadurch gekennzeichnet, dass** es auch einen Schritt vor dem Schritt des Fixierens des Knopfes (20) umfasst, der darin besteht, die Ausstülpung (12) an der Kappe (11) herunterzuklappen, so dass das Material (13) ist zwischen der Kappe (11) und dem Vorsprung (12) angeordnet.

## Claims

1. Bellows (10) of a gearbox control, said bellows (10) having a generally tubular shape comprising a section (S1) of smaller diameter, a surface of said bellows (10) being at least partially covered with a material soundproofing (13),
said bellows (10) being **characterized in that**:
- It comprises a cap (11) forming a first truncated cone and a protuberance (12) forming a second truncated cone, said cap (11) and said protuberance (12) being linked to the place of said section (S1) further small diameter; and
- The surface at least partially covered with said soundproofing material (13) belongs to said protuberance (12).2. Bellows (10) according to claim 1, **characterized in that** said material (13) is sewn onto said protuberance (12).

2. Bellows (10) according to claim 1, **characterized in that** said material (13) is sewn onto said protuberance (12).

3. Bellows (10) according to claim 1 or 2, **characterized in that** said material (13) is a synthetic fiber.

4. Gearbox control comprising a bellows (10) according to any one of the preceding claims and a control knob (20), **characterized in that** said knob (20) is held in the bellows (10) at said section (S1) of smaller diameter.

5. Motor vehicle **characterized in that** it comprises a gearbox control according to claim 4.

6. Method of mounting a control according to claim 4 in a vehicle, **characterized in that** it comprises successive steps consisting in:
- Fixing said knob (20) on a fixing element of said gearbox control;
- Positioning said protuberance (12) so that said sound-absorbing material (13) is on a surface opposite the knob (20); and
- Fold said cap (11) on said protrusion (12) so that said material (13) is interposed between the cap and the protrusion.

7. Mounting method according to claim 6, **characterized in that** it also comprises a step preceding the step of fixing the knob (20), consisting in folding down said protuberance (12) on said cap (11) so that said material (13) is interposed between the cap (11) and the protrusion (12).
